# EUROPÄISCHE PATENTSCHRIFT

(11) **EP 2 499 395 B1**
(45) Veröffentlichungstag und Bekanntmachung des Hinweises auf die Patenterteilung: **06.11.2013**
(21) Anmeldenummer: 10757082.2
(22) Anmeldetag: 21.09.2010
(51) Int. Cl.: F16H 1/16, F16H 55/06, F16H 57/021

(54) **GETRIEBEANTRIEBSEINHEIT**
TRANSMISSION DRIVE UNIT
UNITÉ D'ENTRAÎNEMENT À ENGRENAGES

(30) Priorität: 09.11.2009 DE 102009046517
(43) Veröffentlichungstag der Anmeldung: 19.09.2012
(73) Patentinhaber: Robert Bosch GmbH, 70442 Stuttgart (DE)
(72) Erfinder: ALBRECHT, Susanne, 76596 Forbach (DE); BRAUNEGGER, Frank, 76596 Forbach Hundsbach (DE); HEITZ, Robert, 76437 Rastatt (DE); STEUER, Peter, 76149 Karlsruhe (DE); REICHMANN, Siegfried, 77866 Rheinau Freistett (DE)
(86) Internationale Anmeldenummer: PCT/EP2010/063857
(87) Internationale Veröffentlichungsnummer: WO 2011/054585

(56) Entgegenhaltungen:
- EP-A2- 2 031 277
- DE-A1- 3 434 093
- DE-A1- 19 548 823
- DE-A1-102004 044 863
- DE-A1-102009 000 760
- GB-A- 2 112 898
- US-A- 4 831 705

## Beschreibung

### Stand der Technik

Die Erfindung betrifft eine Getriebeantriebseinheit. Aus der nachveröffentlichten DE 10 2009 000 760 A1 der Anmelderin ist eine Getriebeantriebseinheit bekannt, welche ein aus Metall, insbesondere aus Sintermetall, hergestelltes Abtriebselement aufweist, das zumindest teilweise von einem als Schneckenrad ausgebildeten Adapterelement umspritzt ist. Das Adapterelement ist innerhalb eines Getriebegehäuses aufgenommen. Das Adapterelement ist auf einem Achsstummel des Gehäusebodens drehbar gelagert, wobei sowohl der Achsstummel als auch das Adapterelement aus Kunststoff bestehen. Die insbesondere als Schiebedachantrieb ausgebildete vorbekannte Getriebeantriebseinheit lässt sich durch das Anspritzen des Adapterelementes relativ preiswert herstellen. Die Verschleißfestigkeit der bekannten Getriebeantriebseinheit ist insbesondere bei hohen Belastungen verbesserungswürdig. Darüber hinaus erfolgt die Krafteinleitung von dem Adapterelement auf das Abtriebselement auf einer relativ geringen axialen Länge, so dass das übertragbare Antriebsmoment beschränkt ist.

Mit der gattungsgemäßen DE 19548823 A1 ist ein Scheibenwischerantrieb bekannt geworden, bei dem eine Abtriebswelle mit einem Schneckenrad umspritzt ist. Dabei ist die Abtriebswelle in einem Getriebegehäuseteil gelagert und ragt durch eine Öffnung aus diesem heraus.

### Offenbarung der Erfindung

Ausgehend von dem dargestellten Stand der Technik liegt der Erfindung die Aufgabe zugrunde, eine Getriebeantriebseinheit derart weiterzubilden, dass sie bei wirtschaftlicher Herstellbarkeit gute Lagereigenschaften bzw. die Möglichkeit der Übertragung relativ hoher Drehmomente ermöglicht. Diese Aufgabe wird bei einer Getriebeantriebseinheit mit den Merkmalen des unabhängigen Anspruchs gelöst. Der Erfindung liegt dabei die Idee zugrunde, zur Verbesserung der Lagereigenschaften das Abtriebselement gleichzeitig als Lagerelement zu nutzen. Da das Abtriebselement aus Metall besteht, ergibt sich somit die Möglichkeit, eine Metall/Kunststoff-Lagerstelle auszubilden, welche sich gegenüber einer Kunststoff/Kunststoff-Lagerstelle durch eine verbesserte Verschleißfestigkeit auszeichnet. Eine kostengünstige radiale Lagerung des Abtriebselementes lässt sich bewirken, indem das Abtriebselement wenigstens einen Bereich aufweist, in die ein der Lagerung dienender Zapfen hineinragt. Es ist vorgesehen, dass das Adapterelement durch zumindest teilweises Umspritzen des Abtriebselements gebildet ist. Eine derartige Ausbildung ermöglicht eine besonders innige Verbindung zwischen dem Adapterelement und dem Abtriebselement, so dass sich besonders hohe Drehmomente übertragen lassen. Eine besonders zuverlässige und relativ hohe Radialkräfte aufnehmende Lagerung wird bewirkt, indem die radiale Lagerung der aus Adapterelement und Abtriebselement bestehenden Einheit zwei, unterschiedliche Durchmesser aufweisende Lagerstellen aufweist.

Vorteilhafte Weiterbildungen der erfindungsgemäßen Getriebeantriebseinheit ergeben sich aus den Unteransprüchen. In den Rahmen der Erfindung fallen auch Kombinationen aus zumindest zwei von in den Ansprüchen, der Beschreibung und/oder den Figuren offenbarten Merkmalen.

Die Übertragung besonders hoher Drehmomente lässt sich bewirken, wenn das Abtriebselement bis in eine Symmetrieebene des Adapterelementes verlängert ausgebildet ist. Dadurch erfolgt die Einleitung des Drehmoments von dem Adapterelement in der Ebene des Abtriebselementes.

In einer nicht zur Erfindung gehörenden Ausgestaltung wird eine besonders kostengünstige Herstellbarkeit der Getriebeantriebseinheit ermöglicht, wobei sich gleichzeitig ebenfalls relativ hohe Drehmomente übertragen lassen. Dabei liegt der Gedanke zugrunde, durch ein mit dem Adapterelement verbindbares Abtriebselement, welches als Tiefziehteil ausgebildet ist, eine besonders einfache und preisgünstige Herstellbarkeit des Abtriebselementes zu ermöglichen. Die Fertigung lässt sich hierbei besonders einfach gestalten, wenn das Abtriebselement auf das Adapterelement aufgepresst ist. Das Aufpressen stellt somit einen einzigen Montageschritt dar, welcher sich sehr einfach in die Fertigung integrieren lässt. Um die Übertragung der Drehmomente zu ermöglichen ist es in einer vorteilhaften Ausgestaltung vorgesehen, dass das Abtriebselement topf- oder hülsenförmig ausgebildet ist und an seiner Innenfläche wenigstens eine Anformung aufweist, die mit einer am Adapterelement angeformten Gegenanformung zusammenwirkt und das Abtriebselement mit dem Adapterelement drehfest verbindet. Hierbei wird im Falle des Aufpressens eine besonders einfache Montage ermöglicht, wenn die wenigstens eine Anformung und die wenigstens eine Gegenanformung gegenüber der Längsachse des Abtriebselements schräg angeordnet ist. Eine axiale Sicherung zwischen dem Adapterelement und dem Abtriebselement, welche insbesondere im Falle des Aufpressens des Abtriebselements auf dem Adapterelement sinnvoll ist, wird ermöglicht, wenn das Abtriebselement an einer Innenfläche wenigstens eine Rastgeometrie aufweist, die mit einer an dem Adapterelement ausgebildeten Gegengeometrie zusammenwirkt und dabei das Abtriebselement auf dem Adapaterelement axial sichert.

Weitere Vorteile der Erfindung ergeben sich aus der nachfolgenden Beschreibung bevorzugter Ausführungsbeispiele sowie anhand der Zeichnungen.

Diese zeigen in:
- Fig. 1: eine erste erfindungsgemäße Getriebeantriebseinheit in einem Längsschnitt,
- Fig. 2: eine Explosionsdarstellung eines Adapterelements und eines Abtriebselements, wie sie bei der ersten Getriebeantriebseinheit gemäß der Fig. 1 verwendet werden,
- Fig. 3: eine zweite erfindungsgemäße Getriebeantriebseinheit im Längsschnitt mit gegenüber der Fig. 1 geändertem Adapterelement,
- Fig. 4: eine Explosionsdarstellung von Abtriebselement und Adapterelement, wie sie bei einer Getriebeantriebseinheit gemäß der Fig. 3 verwendet werden,
- Fig. 5: eine nicht erfindungsgemäße Getriebeantriebseinheit im Längsschnitt,
- Fig. 6: eine aus Abtriebselement und Adapterelement bestehende Einheit, wie sie bei der dritten Getriebeantriebseinheit gemäß der Fig. 5 verwendet wird in perspektivischer Ansicht,
- Fig. 7: eine weitere nicht erfindungsgemäße Getriebeantriebseinheit im Längsschnitt,
- Fig. 8: eine Explosionsdarstellung eines Adapterelements und eines Abtriebselements, wie sie bei der Getriebeantriebseinheit gemäß der Fig. 7 verwendet werden,
- Fig. 9: eine weitere nicht erfindungsgemäße Getriebeantriebseinheit mit einem tiefgezogenen Abtriebselement im Längsschnitt,
- Fig. 10: eine Explosionsdarstellung eines Adapterelements und Abtriebselements, wie sie bei der Getriebeantriebseinheit gemäß der Fig. 9 verwendet werden,
- Fig. 11: eine perspektivische Ansicht auf ein Abtriebselement gemäß der Fig. 10,
- Fig. 12: eine weitere nicht erfindungsgemäße Getriebeantriebseinheit, bei der das Adapterelement durch Umspritzen eines tiefgezogenen Abtriebselements gebildet ist und
- Fig. 13: eine perspektivische Ansicht auf ein Abtriebselement, wie dies bei der Getriebeantriebseinheit gemäß der Fig. 12 verwendet wird.

Gleiche Bauteile bzw. Bauteile mit gleicher Funktion sind in den Figuren mit derselben Bezugsziffer versehen.

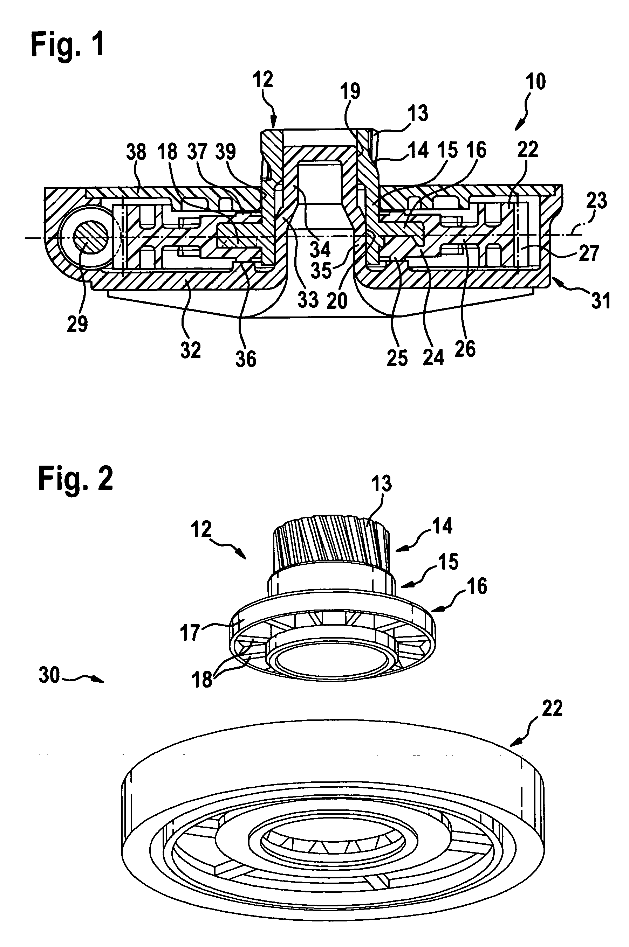

In der Fig. 1 ist eine erste Getriebeantriebseinheit 10 dargestellt, wie sie insbesondere, aber nicht einschränkend, zur Verwendung in einem Schiebedachantrieb eines Kraftfahrzeugs vorgesehen ist. Die Getriebeantriebseinheit 10 weist ein aus Metall, insbesondere aus Sintermetall bestehendes, als Abtriebsritzel 12 ausgebildetes Abtriebselement auf. Das Abtriebsritzel 12 stellt hierbei die Schnittstelle zu einem Schiebedachsystem dar, das sich über eine am Abtriebsritzel 12 ausgebildete schräge Außenverzahnung 13 im Eingriff mit einem nicht dargestellten Übertragungsmittel befindet. Über das Übertragungsmittel wird die Verstellung des Dachmechanismus realisiert.

Das Abtriebsritzel 12 weist gemäß der Fig. 2 drei Abschnitte 14 bis 16 auf. An dem ersten Abschnitt 14 ist die Außenverzahnung 13 ausgebildet. An den ersten Abschnitt 14 schließt sich ein zweiter Abschnitt 15 an, der im Wesentlichen hülsenförmig ausgebildet ist. Der zweite Abschnitt 15 ist in etwa mittig von einem ringförmigen dritten Bereich 16 umgeben, der einen umlaufenden, stegartigen Rand 17 aufweist. An der Unterseite bzw. Oberseite (nicht dargestellt) des dritten Abschnitts 15 sind strahlenförmig angeordnete Formrippen 18 einstückig angeformt. Wie insbesondere aus der Fig. 1 erkennbar ist, weist der erste Abschnitt 14 an seiner Innenwand im Bereich der Außenverzahlung 13 einen ersten Aufnahmebereich 19 auf, an den sich im Bereich des zweiten Abschnitts 15 an der Innenwand ein zweiter Aufnahmebereich 20 anschließt.

Das soweit beschriebene Abtriebsritzel 12 ist mit einem aus Kunststoff bestehenden, als Schneckenrad 22 ausgebildeten Adapterelement umspritzt und mit diesem durch Formschluss verbunden. Wie insbesondere anhand der Fig. 1 erkennbar ist, nimmt dabei der zweite Abschnitt 15 des Abtriebsritzels 12 vorzugsweise die gesamte Höhe des Schneckenrades 22 ein, wobei sich der dritte, ringförmige Abschnitt 16 des Abtriebsritzels 12 in etwa in der Symmetrieebene 23 des Schneckenrades 22 befindet.

Der Formschluss zwischen dem Schneckenrad 22 und dem Abtriebsritzel 12 wird insbesondere durch den umlaufenden Rand 17 und die Formrippen 18 des Abtriebsritzels 12 verstärkt, so dass das Abtriebsritzel 12 drehfest mit dem Schneckenrad 22 verbunden ist. Das Schneckenrad 22 weist einen inneren Bereich 24 auf, an dessen Unterseite ein Lagerbund 25 angeformt ist. Über einen ringförmigen mittleren Bereich 26 schließt sich am Schneckenrad 22 die Außenverzahnung 27 an. Die Außenverzahnung 27 des Schneckenrades 22 ist im Eingriff mit einem als Schneckenwelle 29 ausgebildeten Eingangselement, die das Antriebsmoment eines nicht dargestellten Antriebsmotors für den Schiebedachantrieb an das Schneckenrad 22 bzw. das Abtriebsritzel 12 weiterleitet.

Die soweit beschriebene Einheit 30, bestehend aus dem Abtriebsritzel 12 und dem an dem Abtriebsritzel 12 angespritzten Schneckenrad 22 ist mit Ausnahme eines Bereichs des Abtriebsritzels 12 innerhalb eines aus Kunststoff bestehenden Getriebegehäuses 31 angeordnet. Das Getriebegehäuse 31 umfasst ein Gehäuseunterteil 32, das mittig einen angeformten Lagerzapfen 33 aufweist. Der Lagerzapfen 33 weist zwei Bereiche 34 und 35 auf, die der radialen Lagerung des Schneckenrades 22 im Getriebegehäuse 31 dienen, wozu der erste Bereich 34 mit dem ersten Aufnahmebereich 19 des Abtriebsritzels 12 und der zweite Bereich 35 mit dem zweiten Aufnahmebereich 20 des Abtriebsritzels 12 in Anlagekontakt ist. Die axiale Lagerung des Schneckenrades 22 im Getriebegehäuse 31 erfolgt über einen am Boden des Gehäuseunterteils 32 angeformten, ringförmig umlaufenden Steg 36, der mit dem Lagerbund 25 an der Unterseite des Schneckenrades 22 zusammenwirkt. Ein weiterer, ringförmig umlaufender Steg 37 auf der Oberseite des Schneckenrades 22 stützt sich an einem Gehäusedeckel 38 ab, der mit dem Gehäuseunterteil 32 z.B. durch eine Rast- oder Klebeverbindung verbunden ist. Hierbei weist der Gehäusedeckel 38 einen mittig angeordneten Durchbruch 39 auf, durch den das Abtriebsritzel 12 aus dem Getriebegehäuse 31 ragt.

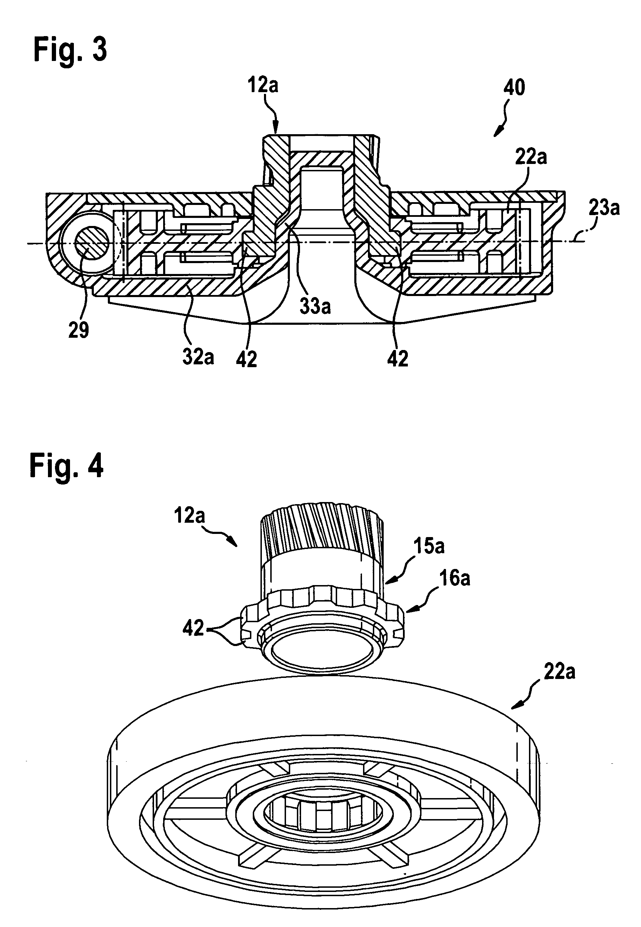

In den Fig. 3 und 4 ist eine zweite erfindungsgemäße Getriebeantriebseinheit 40 dargestellt. Die zweite Getriebeantriebseinheit 40 unterscheidet sich von der ersten Getriebeantriebseinheit 10 im Wesentlichen lediglich durch die Ausbildung des Abtriebsritzels 12a bzw. des Schneckenrades 22a. Hierbei weist das Abtriebsritzel 12a im Bereich des zweiten Abschnitts 15a einen dritten Abschnitt 16a auf, der zahnradartige Vorsprünge 42 aufweist. Die Vorsprünge 42 befinden sich, wie insbesondere anhand der Fig. 3 erkennbar ist, ebenfalls im Wesentlichen in Höhe der Symmetrieebene 23a des Schneckenrades 22a. Die Vorsprünge 42 dienen der Ausbildung eines Formschlusses zwischen dem Abtriebsritzel 12a und dem Schneckenrad 22a zur Erhöhung der übertragbaren Drehmomente. Die Lagerung des Abtriebsritzels 12a erfolgt analog zur Lagerung des Abtriebsritzels 12 über eine Metall/Kunststoff-Paarung zwischen dem Abtriebsritzels 12a und dem Lagerzapfen 33a des Gehäuseunterteils 32a.

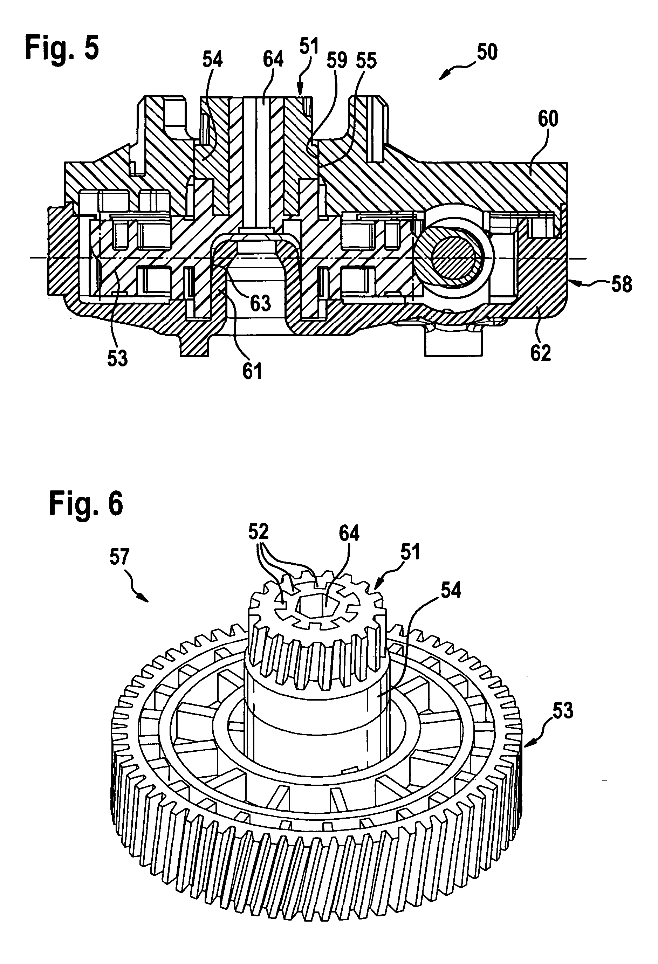

In den Fig. 5 und 6 ist eine nicht erfindungsgemäße Getriebeantriebseinheit 50 dargestellt. Diese Getriebeantriebseinheit 50 umfasst ein hülsenförmiges Abtriebsritzel 51 mit einer innenverzahnung 52, die dem Formschluss zwischen dem Abtriebsritzel 51 und dem Schneckenrad 53 dient. Ferner ist im mittleren Bereich des Abtriebsritzels 51 ein Lagerbund 54 ausgebildet, dessen Außenwand 55 als erste radiale Lagerung des Abtriebsritzels 51 bzw. der aus Abtriebsritzel 51 und Schneckenrad 53 bestehenden Einheit 57 im Getriebegehäuse 58 dient. Hierbei wirkt der Lagerbund 54 mit einer Durchgangsbohrung 59 des aus Kunststoff bestehenden Gehäusedeckels 60 zusammen. Eine zweite radiale Lagerung der Einheit 57 wird zwischen dem Lagerzapfen 61 im Gehäuseunterteil 62 und einer durch eine im Schneckenrad 53 ausgebildeten Bohrung 63 gebildet. Zusätzlich ist mittig im Abtriebsritzel 51 noch ein Innensechskant 64 ausgebildet, der der Hilfsbetätigung des Schiebedachantriebs dient, sollte dessen Antriebsmotor defekt sein. Die dritte Getriebeantriebseinheit 50 weist somit zwei radiale Lagerstellen für die Einheit 57 auf, wovon die eine Lagerstelle als Metall/Kunststoff-Paarung ausgebildet ist, während die andere Lagerstelle als Kunststoff/Kunststoff-Lagerstelle ausgebildet ist.

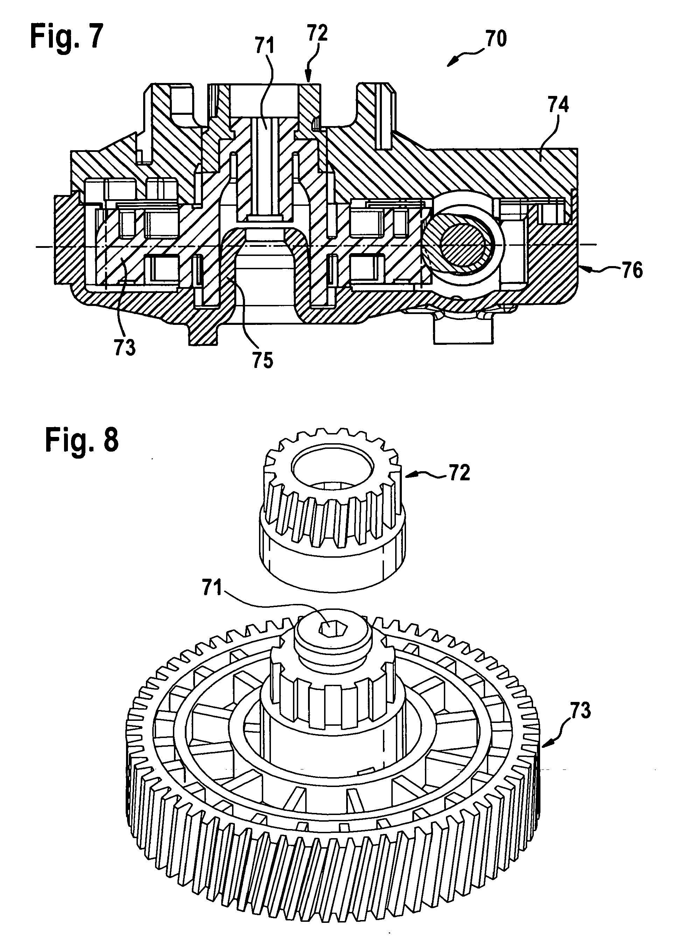

In den Fig. 7 und 8 ist eine weitere nicht erfindungsgemäße Getriebeantriebseinheit 70 dargestellt, die sich von der dritten Getriebeantriebseinheit 50 im Wesentlichen nur dadurch unterscheidet, dass die Hilfsbetätigung für den Schiebedachantrieb mittels des Innensechskants 71 nicht im Abtriebsritzel 72, sondern im Schneckenrad 73 ausgebildet ist. Auch die vierte Getriebeantriebseinheit 70 weist eine erste radiale Lagerung des Abtriebsritzels 72 im Gehäusedeckel 74 auf, während das aus Kunststoff bestehende Schneckenrad 73 im Bereich eines Lagerzapfens 75 des Gehäuseunterteils 76 radial gelagert ist. Die formschlüssige Verbindung zwischen dem Abtriebsritzel 72 und dem Schneckenrad 73 erfolgt insbesondere durch an der Innenwand des Abtriebsritzels 72 im Bereich der ersten Lagerung ausgebildeten, stegartigen Fortsätzen.

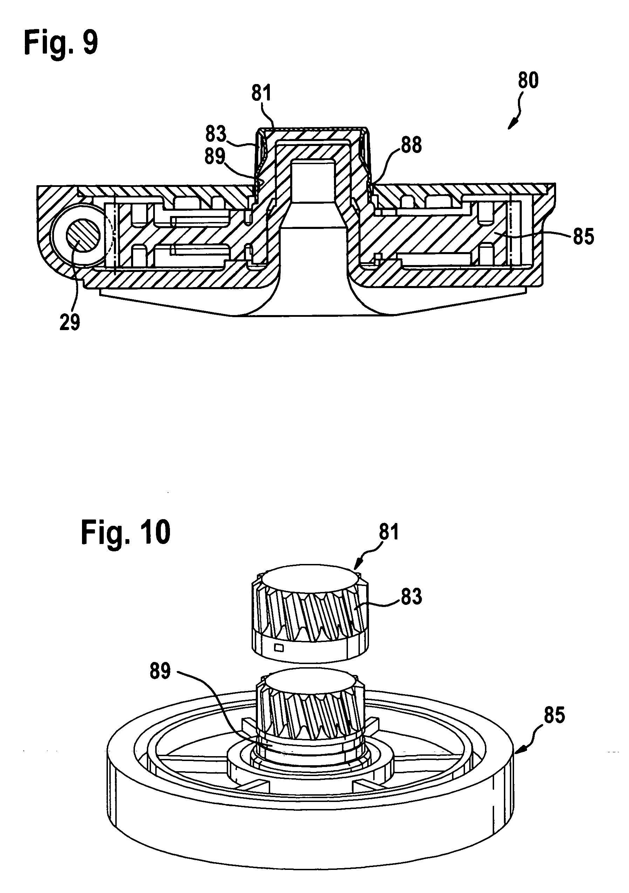

In den Fig. 9 bis 11 ist eine weitere nicht erfindungsgemäße Getriebeantriebseinheit 80 dargestellt. Bei der fünften Getriebeantriebseinheit 80 besteht dessen Abtriebsritzel 81 aus einem tiefgezogenen, topfförmigen Blechteil 82, das im Bereich seiner Verzahnung 83 radial nach innen ragende, schräg angeordnete Abschnitte 84 aufweist, welche auf der dem Schneckenrad 85 zugewandten Seite mit Schneiden 86 ausgebildet sind. Weiterhin erkennt man an einem dem Schneckenrad 85 zugewandten, unteren ringförmig umlaufenden Abschnitt 87 des Abtriebsritzels 81 an der Innenwand ausgebildete Verrastungsabschnitte 88. Die Verrastungsabschnitte 88 wirken mit einer am Schneckenrad 85 ausgebildeten Umfangsnut 89 zusammen. Die aus Abtriebsritzel 81 und Schneckenrad 86 gebildete Einheit wird derart gefertigt, dass das Schneckenrad 85 und das Abtriebsritzel 81 in separaten Prozessen hergestellt werden. Anschließend wird das Abtriebsritzel 81 auf das Schneckenrad 85 aufgepresst, wobei die Verrastungsabschnitte 88 in der Endposition des Abtriebsritzels 81 mit der Umfangsnut 89 zusammenwirken, so dass das Abtriebsritzel 81 auf dem Schneckenrad 85 axial gesichert ist.

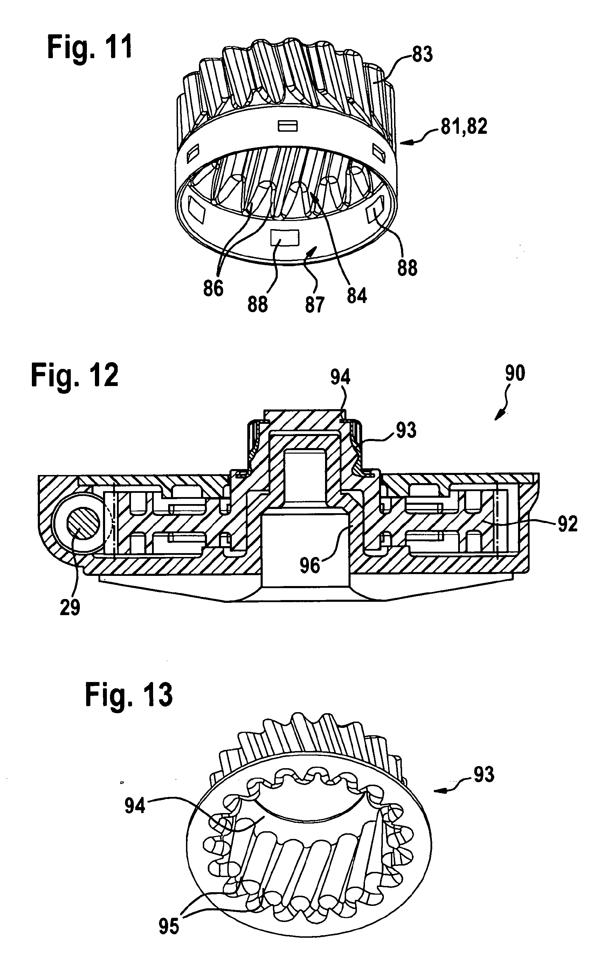

In den Fig. 12 und 13 ist eine weitere nicht erfindungsgemäße Getriebeantriebseinheit 90 dargestellt. Die sechste Getriebeantriebseinheit 90 unterscheidet sich von der fünften Getriebeantriebseinheit 80 im Wesentlichen dadurch, dass dessen Schneckenrad 92 durch Umspritzen des ebenfalls als Tiefziehteil ausgebildeten Abtriebsritzels 93 gebildet wird. Hierbei weist das Abtriebsritzel 93 entsprechend der Fig. 13 auf der dem Schneckenrad 92 zugewandten Seite einen ringförmig umlaufenden Bund 94 auf, der, nachdem er von Kunststoff des Schneckenrades 92 umspritzt ist, eine axiale Fixierung des Abtriebsritzels 93 im Schneckenrad 92 bewirkt. Ebenfalls erkennt man an der Innenwand des Abtriebsritzels 93 ausgebildete, schräg angeordnete Vertiefungen 95, die, nachdem sie von Kunststoff ausgespritzt sind, die Verdrehsicherheit zwischen dem Abtriebsritzel 93 und dem Schneckenrad 92 gewährleisten. Die radiale und axiale Lagerung des Schneckenrades 92 erfolgt ebenfalls an zwei unterschiedlichen Durchmessern eines Lagerzapfens 96.

## Patentansprüche

1. Getriebeantriebseinheit (10; 40; 50; 70) mit einem aus Kunststoff bestehenden Adapterelement (22; 22a; 53; 73), über das ein Drehmoment von einem Eingangselement (29) eingeleitet wird und einem aus Metall bestehenden Abtriebselement (12; 12a; 51; 72) zur Weiterleitung des Drehmoments, wobei das Adapterelement (22; 22a; 53; 73) und das Abtriebselement (12; 12a; 51; 72) unmittelbar miteinander gekoppelt und starr verbunden sind, wobei das Adapterelement (22; 22a; 53; 73) ein Spritzgußteil ist, das durch zumindest teilweises Umspritzen des Abtriebselements (12; 12a; 51; 72) gebildet ist und wobei das Abtriebselement (12; 12a; 51; 72) als Lagerelement dient, **dadurch gekennzeichnet, dass** das Abtriebselement (12; 12a) als Abtriebsritzel (12) mit einer Außenverzahnung (13) ausgebildet ist, und das Abtriebselement (12; 12a; 51; 72) an einer Innenwand wenigstens einen Bereich (19; 20; 63) aufweist, in den ein der Lagerung dienender Lagerzapfen (33; 33a; 61; 75) hineinragt, wobei der Lagerzapfen (33) zwei Bereiche (34) und (35) aufweist, die der radialen Lagerung des als Schneckenrad (22) ausgebildeten Adapterelement (22; 22a; 53; 73) im Getriebegehäuse (31) dienen, wozu der erste Bereich (34) mit dem ersten Aufnahmebereich (19) des Abtriebsritzels (12) und der zweite Bereich (35) mit dem zweiten Aufnahmebereich (20) des Abtriebsritzels (12) in Anlagekontakt ist, und die radiale Lagerung zwei unterschiedliche Durchmesser aufweist.

2. Getriebeantriebseinheit nach Anspruch 1,
**dadurch gekennzeichnet,**
**dass** das Abtriebselement (12; 12a) axial bis in eine Symmetrieebene (23; 23a) des Adapterelements (22; 22a) verlängert ausgebildet ist.

3. Getriebeantriebseinheit nach Anspruch 1 oder 2,
**dadurch gekennzeichnet, dass** am Abtriebselement (12; 12a) ein im Wesentlichen hülsenförmig Abschnitt (15) ausgebildet ist, der von einem ringförmigen Bereich (16) umgeben ist, der einen umlaufenden, stegartigen Rand (17) aufweist.

4. Getriebeantriebseinheit nach einem der Ansprüche 1 bis 3,
**dadurch gekennzeichnet,**
**dass** am Abschnitt (15) des Abtriebselements (12, 12a) strahlenförmig angeordnete Formrippen 18 einstückig angeformt sind, die mit dem Schneckenrad umspritzt sind und mit diesem durch Formschluß verbunden sind.

5. Getriebeantriebseinheit nach einem der Ansprüche 1 bis 4,
**dadurch gekennzeichnet,**
**dass** das Getriebegehäuse (31) ein Gehäuseunterteil (32) umfasst, das mittig den angeformten Lagerzapfen (33) aufweist.

6. Getriebeantriebseinheit nach einem der Ansprüche 1 bis 5,
**dadurch gekennzeichnet,**
**dass** der Gehäusedeckel (38) einen mittig angeordneten Durchbruch (39) aufweist, durch den das Abtriebsritzel (12) aus dem Getriebegehäuse (31) ragt.

7. Getriebeantriebseinheit nach einem der Ansprüche 1 oder 2,
**dadurch gekennzeichnet,**
**dass** im Bereich des hülsenförmigen Abschnitts (15, 15a) ein weiterer Abschnitt (16a) mit zahnradartigen Vorsprüngen (42) ausgebildet ist, die einen Formschluß mit dem Schneckenrad (22) bilden.

## Claims

1. Gear drive unit (10; 40; 50; 70), having an adapter element (22; 22a; 53; 73) which is composed of plastic and via which a torque is introduced from an input element (29), and having a drive output element (12; 12a; 51; 72), which is composed of metal, for transmitting the torque onward, wherein the adapter element (22; 22a; 53; 73) and the drive output element (12; 12a; 51; 72) are directly coupled and rigidly connected to one another, wherein the adapter element (22; 22a; 53; 73) is an injection-moulded part which is formed by at least partial insert moulding of the drive output element (12; 12a; 51; 72), and wherein the drive output element (12; 12a; 51; 72) serves as a bearing element, **characterized in that** the drive output element (12; 12a) is in the form of a drive output pinion (12) with an external toothing (13), and the drive output element (12; 12a; 51; 72) has, on an inner wall, at least one region (19, 20; 63) into which there projects a bearing pin (33; 33a; 61; 75) which serves for bearing purposes, wherein the bearing pin (33) has two regions (34) and (35) which serve for the radial bearing of the adapter element (22; 22a; 53; 73), which is in the form of a worm wheel (22), in the gear housing (31), for which purpose the first region (34) is in abutting contact with the first receiving region (19) of the drive output pinion (12) and the second region (35) is in abutting contact with the second receiving region (20) of the drive output pinion (12), and the radial bearing takes place at two different diameters.

2. Gear drive unit according to Claim 1,
**characterized**
**in that** the drive output element (12; 12a) is formed so as to be elongated axially as far as into a plane of symmetry (23; 23a) of the adapter element (22; 22a).

3. Gear drive unit according to Claim 1 or 2,
**characterized in that**, on the drive output element (12; 12a), there is formed a substantially sleeve-like section (15) which is surrounded by an annular region (16) which has an encircling, weblike edge (17).

4. Gear drive unit according to one of Claims 1 to 3,
**characterized**
**in that** radially arranged moulded ribs (18) are integrally formed on the section (15) of the drive output element (12, 12a), which moulded ribs are insert-moulded with the worm wheel and are connected to said worm wheel by a form fit.

5. Gear drive unit according to one of Claims 1 to 4,
**characterized**
**in that** the gear housing (31) comprises a housing lower part (32) which, centrally, has the integrally formed bearing pin (33).

6. Gear drive unit according to one of Claims 1 to 5,
**characterized**
**in that** the housing cover (38) has a centrally arranged aperture (39) through which the drive output pinion (12) projects out of the gear housing (31).

7. Gear drive unit according to either of Claims 1 and 2,
**characterized**
**in that**, in the region of the sleeve-like section (15, 15a), there is formed a further section (16a) with toothed-wheel-like projections (42) which generate a form fit with the worm wheel (22).

## Revendications

1. Unité d'entraînement à engrenages (10 ; 40 ; 50 ; 70) comprenant un élément adaptateur (22 ; 22a ; 53 ; 73) constitué de plastique, par le biais duquel un couple est appliqué par un élément d'entrée (29), et un élément de sortie (12 ; 12a ; 51 ; 72) constitué de métal pour la transmission du couple, l'élément adaptateur (22 ; 22a ; 53 ; 73) et l'élément de sortie (12 ; 12a ; 51 ; 72) étant accouplés directement l'un à l'autre et reliés rigidement, l'élément adaptateur (22 ; 22a ; 53 ; 73) étant une pièce moulée par injection qui est formée par surmoulage au moins partiel de l'élément de sortie (12 ; 12a ; 51 ; 72), et l'élément de sortie (12 ; 12a ; 51 ; 72) servant d'élément de palier, **caractérisée en ce que** l'élément de sortie (12 ; 12a) est réalisé sous forme de pignon de sortie (12) pourvu d'une denture extérieure (13), et l'élément de sortie (12 ; 12a ; 51 ; 72) comprend, sur une paroi interne, au moins une région (19 ; 20 ; 63) dans laquelle pénètre un tourillon de palier (33 ; 33a ; 61 ; 75) servant au support sur palier, le tourillon de palier (33) comprenant deux régions (34) et (35) qui servent au support sur palier radial, dans le carter d'engrenages (31), de l'élément adaptateur (22 ; 22a ; 53 ; 73) réalisé sous forme de roue hélicoïdale (22) et, à cet effet, la première région (34) étant en contact d'appui avec la première région de réception (19) du pignon de sortie (12) et la deuxième région (35) étant en contact d'appui avec la deuxième région de réception (20) du pignon de sortie (12), et le support sur palier radial présentant deux diamètres différents.

2. Unité d'entraînement à engrenages selon la revendication 1,
**caractérisée en ce que**
l'élément de sortie (12 ; 12a) est réalisé de manière prolongée axialement jusqu'à un plan de symétrie (23 ; 23a) de l'élément adaptateur (22 ; 22a).

3. Unité d'entraînement à engrenages selon la revendication 1 ou 2,
**caractérisée en ce**
**qu'**une section (15) essentiellement en forme de douille est réalisée sur l'élément de sortie (12 ; 12a), laquelle section est entourée par une région angulaire (16) qui comprend un bord (17) périphérique de type nervure.

4. Unité d'entraînement à engrenages selon l'une quelconque des revendications 1 à 3,
**caractérisée en ce que**
des ailettes moulées (18) disposées de manière radiale sont moulées d'une seule pièce sur la section (15) de l'élément de sortie (12, 12a), lesquelles ailettes moulées sont surmoulées avec la roue hélicoïdale et reliées à cette dernière par engagement par complémentarité de formes.

5. Unité d'entraînement à engrenages selon l'une quelconque des revendications 1 à 4,
**caractérisée en ce que**
le carter d'engrenages (31) comporte une partie inférieure de carter (32) qui comprend centralement le tourillon de palier moulé (33).

6. Unité d'entraînement à engrenages selon l'une quelconque des revendications 1 à 5,
**caractérisée en ce que**
le couvercle de carter (38) comprend un passage (39) disposé centralement, à travers lequel le pignon de sortie (12) fait saillie hors du carter d'engrenages (31).

7. Unité d'entraînement à engrenages selon la revendication 1 ou 2,
**caractérisée en ce**
**qu'**une section supplémentaire (16a) pourvue de saillies (42) de type roue dentée est réalisée dans la région de la section en forme de douille (15, 15a), lesquelles saillies forment un engagement par complémentarité de formes avec la roue hélicoïdale (22).
